# EUROPEAN PATENT SPECIFICATION

(11) **EP 3 489 586 B1**
(45) Date of publication and mention of the grant of the patent: **09.09.2020**
(21) Application number: 18207043.3
(22) Date of filing: 19.11.2018
(51) Int. Cl.: F24C 15/20

(54) **METHOD AND DEVICE FOR CONTROLLING RANGE HOOD, AND STORAGE MEDIUM**
VERFAHREN UND VORRICHTUNG ZUR STEUERUNG EINER DUNSTABZUGSHAUBE SOWIE SPEICHERMEDIUM
PROCÉDÉ ET DISPOSITIF DE COMMANDE DE HOTTE ASPIRANTE ET SUPPORT DE STOCKAGE

(30) Priority: 24.11.2017 CN 201711188222
(43) Date of publication of application: 29.05.2019
(73) Proprietor: Beijing Xiaomi Mobile Software Co., Ltd., Beijing 100085 (CN)
(72) Inventor: WU, Ke, Beijing, Beijing 100085 (CN)
(74) Representative: dompatent von Kreisler Selting Werner - Partnerschaft von Patent- und Rechtsanwälten mbB

(56) References cited:
- EP-A2- 2 420 741
- CN-A- 103 230 167
- JP-A- S5 993 125
- JP-U- H0 583 603
- US-A- 4 963 375
- US-A1- 2011 253 693
- US-A1- 2012 076 351
- US-A1- 2015 104 751
- US-A1- 2015 226 439
- US-A1- 2016 252 256
- US-A1- 2017 246 487
- US-A1- 2020 088 412

## Description

### TECHNICAL FIELD

The present disclosure relates to the field of household appliances, and more particularly, to a method and a device for controlling a range hood, and a storage medium.

### BACKGROUND

At present, range hoods are usually arranged in the kitchen, such that cooking smoke in the kitchen can be discharged in time. The range hoods often have different operating power, when the range hood is operating, the greater the operating power is, the greater the wind power of the motor is, such that more cooking smoke can be discharged; the smaller the operating power is, the smaller the wind power of the motor is, such that a small amount of cooking smoke can be discharged.

In the related art, after the range hood is powered on, the user may adjust the operating power of the range hood according to actual conditions during cooking. For example, when the user finds that there is too much cooking smoke during the cooking, the user may manually adjust the operating mode of the range hood, such that the range hood can operate at a higher operating power. When the user finds that there is less cooking smoke during the cooking, the user may manually adjust the operating mode of the range hood, such that the range hood can operate at a lower operating power.

Relevant prior art can be found in US 2017/246487 A1 and US 2011/253693 A1.

### SUMMARY

In order to solve problems in the related art, embodiments of the present disclosure provide a method and a device for controlling a range hood, and a computer readable storage medium, according to claims 1, 8 and 15, respectively.

In at least one embodiment, acquiring the cooking parameter during the cooking of the food comprises at least one of: receiving weight data from a cooking stove or a cooking pot, and determining a weight of the food according to the weight data; and receiving the smoke density from a smoke density sensor.

In at least one embodiment, determining the target operating power of the range hood according to the cooking parameter includes: setting a first preset power as the target operating power of the range hood when the weight of the food is greater than a preset weight, and setting a second preset power as the target operating power of the range hood when the weight of the food is less than or equal to the preset weight.

In at least one embodiment, determining the target operating power of the range hood according to the cooking parameter includes: setting a third preset power as the target operating power of the range hood when the current color of the food is not within a preset color range, and setting a fourth preset power as the target operating power of the range hood when the current color of the food is within the preset color range.

In at least one embodiment, the method further includes: after the third preset power is set as the target operating power of the range hood, generating an alarm message to raise an alarm for cooking, and/or stopping supplying power or gas for cooking the food.

In at least one embodiment, determining the target operating power of the range hood according to the cooking parameter includes: setting a fifth preset power as the target operating power of the range hood when the smoke density is greater than a preset smoke density, and setting a sixth preset power as the target operating power of the range hood when the smoke density is less than or equal to the preset smoke density.

In at least one embodiment, the method further includes: after setting the fifth preset power as the target operating power of the range hood, generating an alarm message to raise an alarm for cooking, and/or stopping supplying power or gas for cooking the food.

In at least one embodiment, the acquiring module is configured to perform at least one of: receiving weight data from a cooking stove or a cooking pot, and determining a weight of the food according to the weight data; and receiving the smoke density from a smoke density sensor.

In at least one embodiment, the determining module is configured to set a first preset power as the target operating power of the range hood when the weight of the food is greater than a preset weight, and set a second preset power as the target operating power of the range hood when the weight of the food is less than or equal to the preset weight.

In at least one embodiment, the determining module is configured to set a third preset power as the target operating power of the range hood when the current color of the food is not within a preset color range, and set a fourth preset power as the target operating power of the range hood when the current color of the food is within the preset color range.

In at least one embodiment, the determining module is configured to generate an alarm message to raise an alarm for the cooking, and/or stop supplying power or gas for cooking the food.

In at least one embodiment, the determining module is configured to set a fifth preset power as the target operating power of the range hood when the smoke density is greater than a preset smoke density, and set a sixth preset power as the target operating power of the range hood when the smoke density is less than or equal to the preset smoke density.

In at least one embodiment, the determining module is configured to generate an alarm message to raise an alarm for the cooking, and/or stop supplying power or gas for cooking the food.

The technical solutions provided by embodiments of the present disclosure may include following beneficial effects.

In embodiments of the present disclosure, the target operating power of the range hood is determined according to the cooking parameter during cooking of the food, such that the range hood can be controlled to operate according to the target operating power. Since the cooking parameter is configured to indicate the state of the food during the cooking, the method for controlling a range hood provided by embodiments of the present disclosure can automatically adjust the operating power of the range hood according to the state of the food during the cooking and avoid adjusting the operating power of the range hood manually, thereby improving efficiency of controlling the range hood, and improving user experience of the range hood.

It is to be understood that both the foregoing general description and the following detailed description arc exemplary and explanatory only and arc not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram of a kitchen control system according to an embodiment of the present disclosure;
Fig. 2 is a flow chart of a method for controlling a range hood according to an embodiment of the present disclosure;
Fig. 3 is a flow chart a method for controlling a range hood according to another embodiment of the present disclosure;
Fig. 4 is a block diagram of a device for controlling a range hood according to an embodiment of the present disclosure; and
Fig. 5 is a block diagram of a device for controlling a range hood according to another embodiment of the present disclosure.

### DETAILED DESCRIPTION

Reference will now be made in detail to exemplary embodiments, examples of which arc illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Before embodiments of the present disclosure are described in detail, application scenarios of embodiments of the present disclosure will be introduced first.

Since cooking food will generate cooking smoke during cooking, if the cooking smoke is not discharged in time, hygiene of the kitchen may be affected. Therefore, the kitchen is usually equipped with a range hood, such that the cooking smoke generated during the cooking can be timely discharged. The method for controlling a range hood provided in embodiments of the present disclosure may be applied to a scene that cooking smoke generated during cooking is timely discharged.

Since the user needs to manually adjust the operating mode of the range hood in the related art, to achieve control of the range hood, efficiency of controlling the range hood is reduced, and user experience of the range hood is affected. Therefore, embodiments of the present disclosure provide a method for controlling a range hood. The method includes determining a target operating power of the range hood according to cooking parameter during cooking of food, and controlling the range hood to operate according to the target operating power. Since the cooking parameter is configured to indicate a state of the food during the cooking, the method for controlling a range hood provided by embodiments of the present disclosure can automatically adjust the operating power of the range hood according to the state of the food during cooking and avoid adjusting the operating power of the range hood manually, thereby improving efficiency of controlling the range hood, and improving user experience of the range hood.

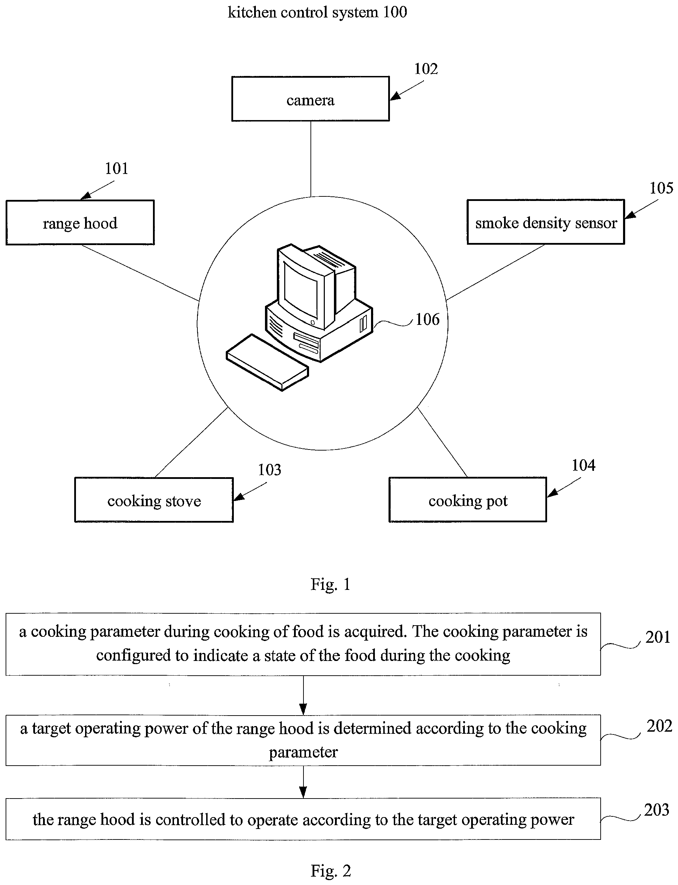

Since the method for controlling a range hood provided by embodiments of the present disclosure may be applied to implement automatic control of the range hood, embodiments of the present disclosure further provide a kitchen control system. As illustrated in Fig.1, the kitchen control system 100 includes a range hood 101, a camera 102, a cooking stove 103 for cooking food, a cooking pot 104 for cooking food, a smoke density sensor 105, and a control center 106.

The range hood 101, the camera 102, the cooking stove 103 for cooking food, the cooking pot 104 for cooking food and the smoke density sensor 105 may communicate with the control center 106 in a wired or wireless manner.

The range hood 101 is configured to operate according to a control instruction sent by the control center 106, to discharge cooking smoke generated during the cooking. The camera 102 is configured to capture a picture of the food during the cooking, and report the captured picture to the control center 106. In addition to cooking the food, the cooking stove 103 or the cooking pot 104 is further configured to determine weight data by a weight scale installed thereon, and report the weight data to the control center 106. The smoke density sensor 105 is configured to determine a current smoke density, and report the smoke density to the control center 106. The control center 106 is configured to determine operating power of the range hood 101 according to the picture from the camera 102, the weight data from the cooking stove 103 or the cooking pot 104 and the smoke density from the smoke density sensor 105, and send the control instruction to the range hood 101, so as to enable the range hood 101 to operate according to the determined operating power.

In at least one embodiment, the range hood 101, the camera 102, the cooking stove 103 for cooking food, the cooking pot 104 for cooking food and the smoke density sensor 105 may also communicate with the range hood 101 in a wired or wireless manner. In this case, the range hood 101 is equivalent to the control center 106 in Fig. 1, i.e., the range hood 101 determines its own operating power according to the picture from the camera 102, the weight data from the cooking stove 103 or the cooking pot 104 and the smoke density from the smoke density sensor 105, and operates according to the determined operating power.

In addition, the camera 102 and the smoke density sensor 105 may be a camera and a smoke density sensor separately arranged in the kitchen, or may be a camera and a smoke density sensor integrated in the range hood 101, which is not limited in embodiments of the present disclosure.

The control center may be a terminal such as a mobile phone, a tablet computer, or a computer, or may be a server. In Fig. 1, the control center is taken as a computer for illustration.

In the following, the method for controlling a range hood provided by embodiments of the present disclosure is described in detail.

Fig. 2 is a flow chart of a method for controlling a range hood according to an embodiment of the present disclosure. As illustrated in Fig. 2, the method may include the followings.

At block 201, a cooking parameter during cooking of food is acquired. The cooking parameter is configured to indicate a state of the food during the cooking.

At block 202, a target operating power of the range hood is determined according to the cooking parameter.

At block 203, the range hood is controlled to operate according to the target operating power.

In embodiments of the present disclosure, the target operating power of the range hood is determined according to the cooking parameter during cooking of the food, such that the range hood can be controlled to operate according to the target operating power. Since the cooking parameter is configured to indicate the state of the food during the cooking, the method for controlling a range hood provided by embodiments of the present disclosure can automatically adjust the operating power of the range hood according to the state of the food during the cooking and avoid adjusting the operating power of the range hood manually, thereby improving efficiency of controlling the range hood, and improving user experience of the range hood.

The cooking parameter includes a current color of the food.

In at least one embodiment, the cooking parameter includes at least one of a weight of the food, and a smoke density.

Acquiring the cooking parameter during cooking of the food includes at least one of: receiving weight data from a cooking stove or a cooking pot, and determining the weight of the food according to the weight data; receiving a picture of the food from a camera, and determining the current color of the food according to pixel values of the picture; and receiving the smoke density from a smoke density sensor.

In at least one embodiment, the cooking parameter includes the weight of the food.

Determining the target operating power of the range hood according to the cooking parameter includes: setting a first preset power as the target operating power of the range hood when the weight of the food is greater than a preset weight, and setting a second preset power as the target operating power of the range hood when the weight of the food is less than or equal to the preset weight. The first preset power is greater than the second preset power.

The cooking parameter includes the current color of the food.

Determining the target operating power of the range hood according to the cooking parameter includes: setting a third preset power as the target operating power of the range hood when the current color of the food is not within a preset color range, in which the preset color range is a standard color range of the food, and setting a fourth preset power as the target operating power of the range hood when the current color of the food is within the preset color range. The third preset power is greater than the fourth preset power.

In at least one embodiment, after the third preset power is set as the target operating power of the range hood, the method further includes: generating an alarm message to raise an alarm for cooking, and stopping supplying power or gas for cooking the food.

In at least one embodiment, the cooking parameter includes the smoke density.

Determining the target operating power of the range hood according to the cooking parameter includes: setting a fifth preset power as the target operating power of the range hood when the smoke density is greater than a preset smoke density, and setting a sixth preset power as the target operating power of the range hood when the smoke density is less than or equal to the preset smoke density. The fifth preset power is greater than the sixth preset power.

In at least one embodiment, after the fifth preset power is set as the target operating power of the range hood, the method further includes: generating an alarm message to raise an alarm for cooking, and stopping supplying power or gas for cooking the food.

It can be seen from the kitchen control system illustrated in Fig. 1 that, the method for controlling a range hood illustrated in Fig. 2 may be performed by a control center, and may also be performed by the range hood itself, which is not limited in embodiments of the present disclosure. In particular, the following embodiments will be described in detail by the control center performing the method for controlling a range hood illustrated in Fig. 2.

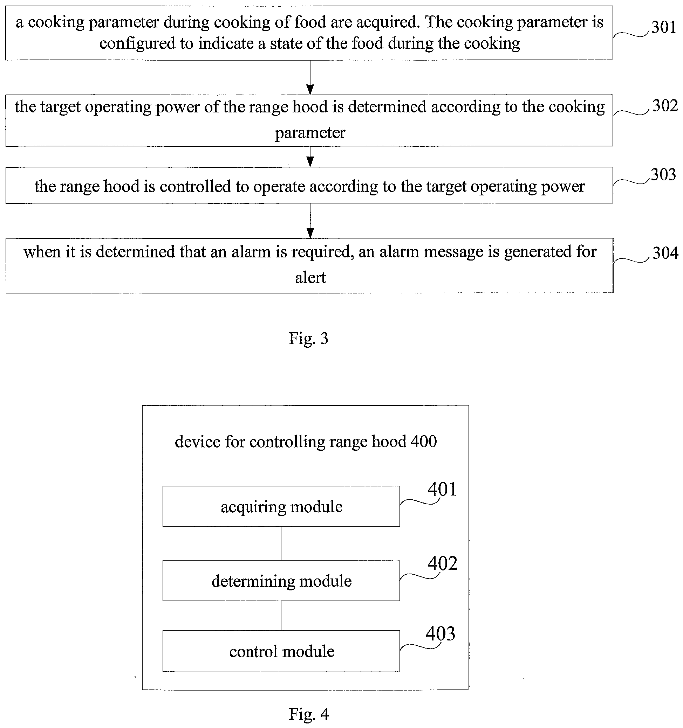

Fig. 3 is a flow chart of a method for controlling a range hood according to another embodiment of the present disclosure. As illustrated in Fig. 3, the method may include the followings.

At block 301, a cooking parameter during cooking of food is acquired. The cooking parameter is configured to indicate a state of the food during the cooking.

When the food is in the cooking process, the state of the food during the cooking can be used to characterize cooking smoke that the food may generate. For example, the greater the amount of the food during cooking is, the more cooking smoke may be generated during current cooking. For another example, when the food is in an overcooking state (such as a scorched state), the food may also generate more cooking smoke. Therefore, in embodiments of the present disclosure, in order to determine the operating power of the range hood, it is necessary to determine the cooking parameter during the cooking of the food first.

The cooking parameter includes a current color of the food. The cooking parameter may include at least one of a weight of the food, and a smoke density. Certainly, the cooking parameter may also include other data for describing the cooking status of the food, such as water content in the food.

Accordingly, acquiring the cooking parameter during the cooking of the food includes at least step (2) below.

(1) Weight data from a cooking stove or a cooking pot is received, and the weight of the food is determined according to the weight data.

As illustrated in Fig. 1, a weight scale may be installed on the cooking stove or the cooking pot. When there is food in the cooking stove or the cooking pot, the cooking stove or the cooking pot can acquire weight data at this time, and report the weight data to the control center. When the control center receives the weight data, the control center can remove a net weight of the cooking stove or the cooking pot from the weight data, to acquire the weight of the food.

In at least one embodiment, a zero point of the scale installed on the cooking stove or the cooking pot can be set in advance, such that the weight data acquired through the scale is the weight data excluding the weight of the cooking stove or the cooking pot. In this case, when the control center receives the weight data, the control center can directly determine the weight data as the weight of the food.

(2) Pictures of the food are from a camera, and the color of the food is determined according to pixel values of the picture.

When the food is in the cooking process, the camera can capture the pictures of the food every preset time period, and report the pictures of the food to the control center. When the control center receives the pictures of the food, the control center can process the picture to determine the color of the food.

The pictures of the food are processed as follows. The pixel value of each pixel point in the picture is acquired, and pixel values of all pixel points are averaged to obtain an average pixel value, and the obtained average pixel value is determined as the pixel value of the current color of the food.

Furthermore, in order to improve accuracy of determining the current color of the food, marginalization is performed on the picture to obtain an outline of the cooking pot. In all the pixel points of the pictures, only pixel values of the pixel points within the outline are averaged to obtain an average pixel value, and the average pixel value is determined as the pixel value of the current color of the food.

In addition, the preset time period is set in advance, and the preset time period may be 2s, 3s or 5s. In particular, in order to make the pictures from the camera can represent the current state of the food, the preset time period should not be too long.

(3) The smoke density from the smoke density sensor is received.

Similarly, when the food is in the cooking process, the smoke density sensor disposed in the kitchen may determine the current smoke density timely or every preset time period, and report the determined smoke density to the control center.

The smoke density sensor refers to a type of sensor for detecting the smoke density in the air. The smoke density sensor may be an ionization smoke sensor, a photoelectric smoke sensor, or a gas smoke sensor.

At block 302, the target operating power of the range hood is determined according to the cooking parameter.

It can be seen from block 301 that, the cooking parameter includes a current color of the food and the cooking parameter may include at least one of the weight of the food, and the smoke density. Therefore, accordingly, block 302 may include following three possible implementations.

In a first possible implementation, a scene where the cooking parameter includes the weight of the food is applied. In this case, when the weight of the food is greater than a preset weight, a first preset power is set as the target operating power of the range hood. When the weight of the food is less than or equal to the preset weight, a second preset power is set as the target operating power of the range hood. The first preset power is greater than the second preset power.

The preset weight is set in advance. When the weight of the food is greater than the preset weight, it indicates that the amount of food is increased, more cooking smoke may be generated in the process of cooking the food, and thus the range hood needs to operate at a higher operating power. When the weight of the food is less than or equal to the preset weight, it indicates that the amount of food is not too much, less cooking smoke may be generated in the process of cooking the food, and thus there may be no need for the range hood to operate at the higher operating power. Therefore, when the weight of the food is greater than the preset weight, a larger first preset power may be configured for the range hood, and when the weight of the food is less than or equal to the preset weight, a smaller second preset power may be configured for the range hood.

In addition, the first preset power and the second preset power are set in advance. In practical applications, the first preset power and the second preset power may be flexibly set according to actual needs.

For example, the preset weight is 1kg, the first preset power is 1KW, and the second preset power is 500W. In other words, when the weight of the food is greater than 1kg, it is determined that the target operating power of the range hood is 1KW, and when the weight of the food is less than or equal to 1kg, it is determined that the target operating power of the range hood is 500W.

In a second possible implementation, a scene where the cooking parameter includes the current color of the food is applied. In this case, when the current color of the food is not within a preset color range, a third preset power is set as the target operating power of the range hood. When the current color of the food is within the preset color range, a fourth preset power is set as the target operating power of the range hood. The third preset power is greater than the fourth preset power.

The preset color range is set in advance, and the preset color range is a standard color range of the food. When the current color of the food is not within the preset color range, it indicates that the food may currently be in the overcooking state, such as a scorched state, in this case, more cooking smoke may be generated in the process of cooking the food, and thus the range hood needs to operate at a higher operating power. When the current color of the food is within the preset color range, it indicates that the food is in a standard cooking state, less cooking smoke may be generated in the process of cooking the food, and thus there may be no need for the range hood to operate at the higher operating power. Therefore, when the current color of the food is not within the preset color range, a larger third preset power may be configured for the range hood, and when the current color of the food is within the preset color range, a smaller fourth preset power may be configured for the range hood.

In addition, the third preset power and the fourth preset power are set in advance. In practical applications, the third preset power and the fourth preset power may be flexibly set according to actual needs.

For example, when the food is in the overcooking state, the color of the food may appear charred. Therefore, a pixel value range corresponding to the charred can be determined, and the preset color range can be determined according to the pixel value range corresponding to the charred, i.e., the pixel value range corresponding to the preset color range does not include the pixel value range corresponding to the charred.

In a third possible implementation, a scene where the cooking parameter includes the smoke density is applied. In this case, when the smoke density is greater than a preset smoke density, a fifth preset power is set as the target operating power of the range hood. When the smoke density is less than or equal to the preset smoke density, a sixth preset power is set as the target operating power of the range hood. The fifth preset power is greater than the sixth preset power.

The preset smoke density is set in advance. When the current smoke density is greater than the preset smoke density, it indicates that there is too much cooking smoke in the kitchen, in this case, the range hood needs to operate at a higher operating power. When the current smoke density is less than or equal to the preset smoke density, it indicates that there is less cooking smoke in the kitchen, in this case, there may be no need for the range hood to operate at the higher operating power. Therefore, when the current smoke density is greater than the preset smoke density, a larger fifth preset power may be configured for the range hood, and when the current smoke density is less than or equal to the preset smoke density, a smaller sixth preset power may be configured for the range hood.

In addition, the fifth preset power and the sixth preset power are set in advance. In practical applications, the fifth preset power and the sixth preset power may be flexibly set according to actual needs.

In at least one embodiment, when the cooking parameter includes other parameters configured to characterize the cooking state of the food, the target operating power of the range hood may also be determined according to the other parameters as described in the above three possible implementations.

In addition, when the cooking parameter only include one parameter of the weight of the food, the current color of the food and the smoke density, the target operating power of the range hood may be determined according to one of the above three possible implementations.

When the cooking parameter includes two or more parameters, in this case, the target operating power corresponding to each parameter may be determined according to one of the foregoing three possible implementations, to obtain at least two target operating power. Then, a maximum target operating power can be selected from the at least two target operating powers, and the following block 303 is performed through the selected target operating power.

At block 303, the range hood is controlled to operate according to the target operating power.

After the control center determines the target operating power of the range hood at block 302, the control center can send a control instruction to the range hood, in which, the control instruction carries the target operating power. When the range hood receives the control instruction, the range hood can operate according to the target operating power carried by the control instruction.

At block 304, when it is determined that an alarm is required, an alarm message is generated for alert.

In at least one embodiment, in embodiments of the present disclosure, after the target operating power is determined according to block 302, when it is determined that the range hood needs to operate at the higher operating power, it indicates that there is too much cooking smoke in the kitchen. In this case, the control center may make an alarm to remind the person in the kitchen that there is too much cooking smoke in the kitchen.

In particular, in the above three possible implementations for determining the target operating power of the range hood according to the cooking parameter, there may be security problems in the kitchen in the second possible implementation and the third possible implementation. Therefore, block 304 can be divided into the following two cases.

(1) In the second possible implementation of block 303, when the third preset power is set as the target operating power of the range hood, it indicates that the current color of the food is not within the standard color range, the food may be in the scorched state. In this case, the control center can generate the alarm message to raise an alarm for the cooking.

The alarm message may be voice information. The alarm may be raised for the current cooking process by playing the voice information. For example, the alarm message may be a preset ringtone, and after the preset ringtone is played, the person in the kitchen may hear the preset ringtone and determine that there is too much cooking smoke in the kitchen.

Furthermore, in order to avoid security hazard, after the current cooking process is alarmed, power or gas for cooking the food may also be stopped supplying.

(2) In the third possible implementation of block 303, when the fifth preset power is set as the target operating power of the range hood, it indicates that there is too much cooking smoke in the kitchen, and safety of the person in the kitchen may be affected. Therefore, the control center can generate the alarm message to raise an alarm for the cooking.

Furthermore, in order to avoid security hazard, after the current cooking process is alarmed, power or gas for cooking the food may also be stopped supplying.

In embodiments of the present disclosure, the target operating power of the range hood is determined according to the cooking parameter during cooking of the food, such that the range hood can be controlled to operate according to the target operating power. Since the cooking parameter is configured to indicate the state of the food during the cooking, the method for controlling a range hood provided by embodiments of the present disclosure can automatically adjust the operating power of the range hood according to the state of the food during the cooking and avoid adjusting the operating power of the range hood manually, thereby improving efficiency of controlling the range hood, and improving user experience of the range hood.

Fig. 4 is a block diagram of a device for controlling a range hood according to an embodiment of the present disclosure. As illustrated in Fig. 4, the device includes an acquiring module 401, a determining module 402 and a control module 403.

The acquiring module 401 is configured to acquire a cooking parameter during cooking of food. The cooking parameter is configured to indicate a state of the food during cooking.

The determining module 402 is configured to determine a target operating power of the range hood according to the cooking parameter.

The control module 403 is configured to control the range hood to operate according to the target operating power.

The cooking parameter includes a current color of the food. In at least one embodiment, the cooking parameter includes at least one of a weight of the food, and a smoke density.

The acquiring module 401 is configured to perform receiving a picture of the food from a camera, and determining the current color of the food according to pixel values of the picture. The acquiring module 401 may further be configured to perform at least one of: receiving weight data from a cooking stove or a cooking pot, and determining the weight of the food according to the weight data; and receiving the smoke density from a smoke density sensor.

In at least one embodiment, the cooking parameter includes the weight of the food.

The determining module 402 is configured to set a first preset power as the target operating power of the range hood when the weight of the food is greater than a preset weight, and set a second preset power as the target operating power of the range hood when the weight of the food is less than or equal to the preset weight. The first preset power is greater than the second preset power.

The cooking parameter includes the current color of the food.

The determining module 402 is configured to set a third preset power as the target operating power of the range hood when the current color of the food is not within a preset color range, in which the preset color range is a standard color range of the food, and set a fourth preset power as the target operating power of the range hood when the current color of the food is within the preset color range. The third preset power is greater than the fourth preset power.

In at least one embodiment, the determining module 402 is configured to generate an alarm message to raise an alarm for the cooking, and stop supplying power or gas for cooking the food.

In at least one embodiment, the cooking parameter includes the smoke density.

The determining module 402 is configured to set a fifth preset power as the target operating power of the range hood when the smoke density is greater than a preset smoke density, and set a sixth preset power as the target operating power of the range hood when the smoke density is less than or equal to the preset smoke density. The fifth preset power is greater than the sixth preset power.

In at least one embodiment, the determining module 402 is configured to generate an alarm message to raise an alarm for the cooking, and stop supplying power or gas for cooking the food.

In embodiments of the present disclosure, the target operating power of the range hood is determined according to the cooking parameter during cooking of the food, such that the range hood can be controlled to operate according to the target operating power. Since the cooking parameter is configured to indicate the state of the food during the cooking, the method for controlling a range hood provided by embodiments of the present disclosure can automatically adjust the operating power of the range hood according to the state of the food during the cooking and avoid adjusting the operating power of the range hood manually, thereby improving efficiency of controlling the range hood, and improving user experience of the range hood.

With respect to the device in the above embodiments, specific manners for performing operations for individual modules therein have been described in detail in embodiments regarding to the method, which will not be elaborated herein.

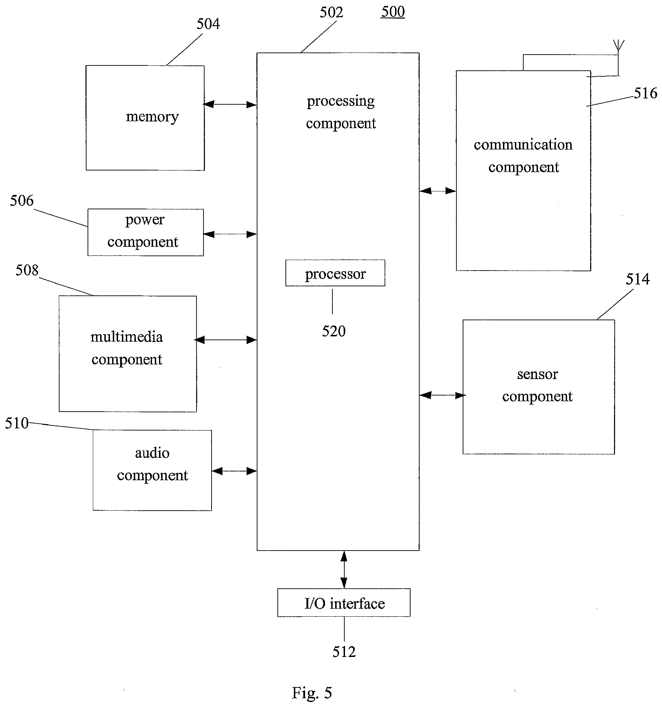

Fig. 5 is a schematic diagram illustrating a device 500 for controlling a range hood according to an embodiment of the present disclosure. For example, the device 500 may be a mobile phone, a computer, a message transceiver device, a game console, a tablet device, a medical device, a fitness device, etc.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front-facing camera and / or a rear-facing camera. When the device 500 is in an operating mode, such as a shooting mode or a video mode, the front-facing camera and / or the rear-facing camera can receive external multimedia data. Each front-facing camera and rear-facing camera may be a fixed optical lens system or has focal length and optical zoom capability.

The audio component 510 is configured to output and/or input audio signals. For example, the audio component 510 includes a microphone (MIC) configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an accclcration/dccclcration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 504 including instructions. The instructions can be performed by the processor 520 in the device 500 to performing the above-described methods. For example, the non-transitory computer-readable storage medium may be a ROM, a RAM, a CD-ROM, a magnetic tape, a floppy disc, an optical data storage device, and the like.

There is provided a non-transitory computer readable storage medium. When instructions in the storage medium are performed by a processor of a terminal, the terminal can perform the method for controlling a range hood provided in the above embodiments.

Other embodiments of the present disclosure will be apparent to those skilled in the art from consideration of the specification and practice of the present disclosure disclosed here. This application is intended to cover any variations, uses, or adaptations of the present disclosure within the scope of the appended claims.

## Claims

1. A method for controlling a range hood (101), comprising:
acquiring (201, 301) a cooking parameter during cooking of food, wherein the cooking parameter is configured to indicate a state of the food during the cooking;
determining (202, 302) a target operating power of the range hood (101) according to the cooking parameter; and
controlling (203, 303) the range hood (101) to operate according to the target operating power;
acquiring (201, 301) the cooking parameter during the cooking of the food comprises:
receiving a picture of the food from a camera (102), and determining a current color of the food according to pixel values of the picture;
**characterized in that** the method further comprises:
performing marginalization on the picture to obtain an outline of a cooking pot (104);
acquiring a pixel value of each pixel point in the picture;
averaging pixel values of pixel points within the outline of the cooking pot to obtain an average pixel value; and
determining the average pixel value as a pixel value of the current color of the food.

2. The method according to claim 1, wherein acquiring (201, 301) the cooking parameter during the cooking of the food comprises at least one of:
receiving weight data from a cooking stove (103) or the cooking pot (104), and determining a weight of the food according to the weight data;
or
receiving a smoke density from a smoke density sensor (105).

3. The method according to claim 1 or 2, wherein determining (202, 302) the target operating power of the range hood (101) according to the cooking parameter comprises:
setting a first preset power as the target operating power of the range hood (101) when the weight of the food is greater than a preset weight; and
setting a second preset power as the target operating power of the range hood (101) when the weight of the food is less than or equal to the preset weight.

4. The method according to claim 1 or 2, wherein determining (202, 302) the target operating power of the range hood (101) according to the cooking parameter comprises:
setting a third preset power as the target operating power of the range hood (101) when the current color of the food is not within a preset color range; and
setting a fourth preset power as the target operating power of the range hood (101) when the current color of the food is within the preset color range.

5. The method according to claim 4, further comprising:
after setting the third preset power as the target operating power of the range hood (101), generating an alarm message to raise an alarm for the cooking; and/or
stopping supplying power or gas for cooking the food.

6. The method according to claim 1 or 2, wherein determining (202, 302) the target operating power of the range hood (101) according to the cooking parameter comprises:
setting a fifth preset power as the target operating power of the range hood (101) when the smoke density is greater than a preset smoke density; and
setting a sixth preset power as the target operating power of the range hood (101) when the smoke density is less than or equal to the preset smoke density.

7. The method according to claim 6, further comprising:
after setting the fifth preset power as the target operating power of the range hood (101), generating an alarm message to raise an alarm for the cooking; and/or
stopping supplying power or gas for cooking the food.

8. A device for controlling a range hood (101), comprising:
an acquiring module (401), configured to acquire a cooking parameter during cooking of food, wherein the cooking parameter is configured to indicate a state of the food during the cooking;
a determining module (402), configured to determine a target operating power of the range hood (101) according to the cooking parameter; and
a control module (403), configured to control the range hood (101) to operate according to the target operating power;
wherein the acquiring module (401) is further configured to perform:
receiving a picture of the food from a camera (102), and determining a current color of the food according to pixel values of the picture;
**characterized in that** the acquiring module (401) is further configured to perform:
performing marginalization on the picture to obtain an outline of a cooking pot (104);
acquiring a pixel value of each pixel point in the picture;
averaging pixel values of pixel points within the outline of the cooking pot to obtain an average pixel value; and
determining the average pixel value as a pixel value of the current color of the food.

9. The device according to claim 8, wherein the acquiring module (401) is configured to perform at least one of:
receiving weight data from a cooking stove (103) or the cooking pot (104), and determining a weight of the food according to the weight data;
or
receiving a smoke density from a smoke density sensor (105).

10. The device according to claim 8 or 9, wherein the determining module (402) is configured to:
set a first preset power as the target operating power of the range hood (101) when the weight of the food is greater than a preset weight; and
set a second preset power as the target operating power of the range hood (101) when the weight of the food is less than or equal to the preset weight.

11. The device according to claim 8 or 9, wherein the determining module (402) is configured to:
set a third preset power as the target operating power of the range hood (101) when the current color of the food is not within a preset color range; and
set a fourth preset power as the target operating power of the range hood (101) when the current color of the food is within the preset color range.

12. The device according to claim 11, wherein the determining module (402) is further configured to:
generate an alarm message to raise an alarm for the cooking; and/or
stop supplying power or gas for cooking the food.

13. The device according to claim 8 or 9, wherein the determining module (402) is configured to:
set a fifth preset power as the target operating power of the range hood (101) when the smoke density is greater than a preset smoke density; and
set a sixth preset power as the target operating power of the range hood (101) when the smoke density is less than or equal to the preset smoke density.

14. The device according to claim 13, wherein the determining module (402) is further configured to:
generate an alarm message to raise an alarm for the cooking; and/or
stop supplying power or gas for cooking the food.

15. A computer readable storage medium, which stores instructions that, when executed by a processor, cause the method according to any one of claims 1 to 7 to be implemented by the device according to claim 8.

## Patentansprüche

1. Verfahren zum Steuern einer Dunstabzugshaube (101), mit den folgenden Schritten:
Erfassen (201, 301) eines Kochparameters während des Kochens von Nahrungsmitteln, wobei der Kochparameter derart festgelegt ist, dass er einen Zustand des Nahrungsmittels während des Kochens angibt;
Bestimmen (202, 302) einer Zielbetriebsleistung der Dunstabzugshaube (101) entsprechend dem Kochparameter; und
Steuern (203, 303) der Dunstabzugshaube (101), um entsprechend der Zielbetriebsleistung zu arbeiten;
wobei das Erfassen (201, 301) des Kochparameters während des Kochens von Nahrungsmitteln aufweist:
Empfangen eines Bildes des Nahrungsmittels von einer Kamera (102) und Bestimmen einer aktuellen Farbe des Nahrungsmittels gemäß Pixelwerten des Bildes,
**dadurch gekennzeichnet, dass** das Verfahren ferner die folgenden Schritte aufweist:
Durchführen einer Marginalisierung an dem Bild, um eine Kontur eines Kochtopfs (104) zu erhalten;
Erfassen eines Pixelwerts jedes Pixelpunkts in dem Bild;
Mitteln von Pixelwerten von Pixelpunkten innerhalb der Kontur des Kochtopfs, um einen mittleren Pixelwert zu erhalten; und
Festlegen des mittleren Pixelwerts als einen Pixelwert der aktuellen Farbe des Nahrungsmittels.

2. Verfahren nach Anspruch 1, bei welchem das Erfassen (201, 301) des Kochparameters während des Kochens des Nahrungsmittels zumindest einen der Schritte aufweist:
Empfangen von Gewichtsdaten von einem Kochherd (103) oder einem Kochtopf (104) und Bestimmen eines Gewichts des Nahrungsmittels entsprechend den Gewichtsdaten;
und/oder
Empfangen einer Rauchdichte von einem Rauchdichtesensor (105).

3. Verfahren nach Anspruch 1 oder 2, bei welchem das Bestimmen (202, 302) der Zielbetriebsleistung der Dunstabzugshaube (101) entsprechend dem Kochparameter aufweist:
Einstellen einer ersten voreingestellten Leistung als Zielbetriebsleistung der Dunstabzugshaube (101), wenn das Gewicht des Nahrungsmittels größer als ein voreingestelltes Gewicht ist; und
Einstellen einer zweiten voreingestellten Leistung als Zielbetriebsleistung der Dunstabzugshaube (101), wenn das Gewicht des Nahrungsmittels kleiner oder gleich dem voreingestellten Gewicht ist.

4. Verfahren nach Anspruch 1 oder 2, bei welchem das Bestimmen (202, 302) der Zielbetriebsleistung der Dunstabzugshaube (101) gemäß dem Kochparameter aufweist:
Einstellen einer dritten voreingestellten Leistung als Zielbetriebsleistung der Dunstabzugshaube (101), wenn die aktuelle Farbe des Nahrungsmittels nicht innerhalb eines voreingestellten Farbbereichs liegt; und
Einstellen einer vierten voreingestellten Leistung als Zielbetriebsleistung der Dunstabzugshaube (101), wenn die aktuelle Farbe des Nahrungsmittels innerhalb des voreingestellten Farbbereichs liegt.

5. Verfahren nach Anspruch 4, ferner mit dem Schritt:
Nach dem Einstellen der dritten voreingestellten Leistung als Zielbetriebsleistung der Dunstabzugshaube (101) Erzeugen einer Alarmmeldung, um einen Alarm für das Kochen auszulösen; und/oder
Unterbrechen der Strom- oder Gasversorgung für das Kochen des Nahrungsmittels.

6. Verfahren nach Anspruch 1 oder 2, bei welchem das Bestimmen (202, 302) der Zielbetriebsleistung der Dunstabzugshaube (101) gemäß dem Kochparameter aufweist:
Einstellen einer fünften voreingestellten Leistung als Zielbetriebsleistung der Dunstabzugshaube (101), wenn die Rauchdichte größer als eine voreingestellte Rauchdichte ist; und
Einstellen einer sechsten voreingestellten Leistung als Zielbetriebsleistung der Dunstabzugshaube (101), wenn die Rauchdichte kleiner oder gleich der voreingestellten Rauchdichte ist.

7. Verfahren nach Anspruch 6, ferner mit den Schritten:
Nach Einstellen der fünften voreingestellten Leistung als Zielbetriebsleistung der Dunstabzugshaube (101) Erzeugen einer Alarmmeldung, um einen Alarm für das Kochen auszulösen;
und/oder Unterbrechen der Strom- oder Gasversorgung für das Kochen des Nahrungsmittels.

8. Vorrichtung zum Steuern einer Dunstabzugshaube (101), welche aufweist:
ein Erfassungsmodul (401), das dazu ausgebildet ist, einen Kochparameter während des Kochens von Nahrungsmitteln zu erfassen, wobei der Kochparameter derart festgelegt ist, dass er einen Zustand des Nahrungsmittels während des Kochens angibt;
ein Bestimmungsmodul (402), das dazu ausgebildet ist, eine Zielbetriebsleistung der Dunstabzugshaube (101) entsprechend dem Kochparameter zu bestimmen; und
ein Steuermodul (403), das dazu ausgebildet ist, die Dunstabzugshaube (101) derart zu steuern, dass sie entsprechend der Zielbetriebsleistung arbeitet,
wobei das Erfassungsmodul (40) ferner dazu ausgebildet ist, Folgendes durchzuführen:
Empfangen eines Bildes des Nahrungsmittels von einer Kamera (102) und Bestimmen einer aktuellen Farbe des Nahrungsmittels gemäß Pixelwerten des Bildes,
**dadurch gekennzeichnet, dass** das Erfassungsmodul (401) ferner dazu ausgebildet ist, Folgendes durchzuführen:
Durchführen einer Marginalisierung an dem Bild, um eine Kontur eines Kochtopfs (104) zu erhalten;
Erfassen eines Pixelwerts jedes Pixelpunkts in dem Bild;
Mitteln von Pixelwerten von Pixelpunkten innerhalb der Kontur des Kochtopfs, um einen mittleren Pixelwert zu erhalten; und
Festlegen des mittleren Pixelwerts als einen Pixelwert der aktuellen Farbe des Nahrungsmittels.

9. Vorrichtung nach Anspruch 8, bei welcher das Erfassungsmodul (401) dazu ausgebildet ist, mindestens eine der folgenden Vorgänge durchzuführen:
Empfangen von Gewichtsdaten von einem Kochherd (103) oder einem Kochtopf (104) und Bestimmen eines Gewichts des Nahrungsmittels entsprechend den Gewichtsdaten;
oder
Empfangen einer Rauchdichte von einem Rauchdichtesensor (105).

10. Vorrichtung nach Anspruch 8 oder 9, bei welcher das Bestimmungsmodul (402) dazu ausgebildet ist:
eine erste voreingestellte Leistung als die Zielbetriebsleistung der Dunstabzugshaube (101) einzustellen, wenn das Gewicht des Nahrungsmittels größer als ein voreingestelltes Gewicht ist; und
eine zweite voreingestellte Leistung als Zielbetriebsleistung der Dunstabzugshaube (101) einstellen, wenn das Gewicht des Nahrungsmittels kleiner oder gleich dem voreingestellten Gewicht ist.

11. Vorrichtung nach Anspruch 8 oder 9, bei welcher das Bestimmungsmodul (402) dazu ausgebildet ist:
eine dritte voreingestellte Leistung als Zielbetriebsleistung der Dunstabzugshaube (101) einzustellen, wenn die aktuelle Farbe des Nahrungsmittels nicht innerhalb einer voreingestellten Farbe liegt; und
eine vierte voreingestellte Leistung als Zielbetriebsleistung der Dunstabzugshaube (101) einzustellen, wenn die aktuelle Farbe des Nahrungsmittels innerhalb des voreingestellten Farbbereichs liegt.

12. Vorrichtung nach Anspruch 11, bei welcher das Bestimmungsmodul (402) ferner dazu ausgebildet ist:
eine Alarmmeldung zu erzeugen, um einen Alarm für das Kochen auszulösen; und/oder
die Strom- oder Gasversorgung für das Kochen des Nahrungsmittels zu unterbrechen.

13. Vorrichtung nach Anspruch 8 oder 9, bei welcher das Bestimmungsmodul (402) dazu ausgebildet ist:
eine fünfte voreingestellte Leistung als die Zielbetriebsleistung der Dunstabzugshaube (101) einzustellen, wenn die Rauchdichte größer als eine voreingestellte Rauchdichte ist; und
eine sechste voreingestellte Leistung als Zielbetriebsleistung der Dunstabzugshaube (101) einzustellen, wenn die Rauchdichte kleiner oder gleich der voreingestellten Rauchdichte ist.

14. Vorrichtung nach Anspruch 13, bei welcher das Bestimmungsmodul (402) ferner dazu ausgebildet ist:
eine Alarmmeldung zu erzeugen, um einen Alarm für das Kochen auszulösen; und/oder
die Strom- oder Gasversorgung für das Kochen des Nahrungsmittels zu unterbrechen.

15. Computerlesbares Speichermedium, welches zum Speichern von Befehlen ausgebildet ist, die, wenn sie von einem Prozessor ausgeführt werden, bewirken, dass das Verfahren gemäß einem der Ansprüche 1 bis 7 von der Vorrichtung nach Anspruch 8 implementiert wird.

## Revendications

1. Procédé de commande d'une hotte aspirante (101), comprenant le fait de:
acquérir (201, 301) un paramètre de cuisson pendant la cuisson des aliments, le paramètre de cuisson étant configuré pour indiquer un état des aliments pendant la cuisson;
déterminer (202, 302) une puissance de fonctionnement cible de la hotte aspirante (101) selon le paramètre de cuisson; et
commander (203, 303) la hotte aspirante (101) de sorte qu'elle fonctionne selon la puissance de fonctionnement cible;
l'acquisition (201, 301) du paramètre de cuisson pendant la cuisson des aliments comprend le fait de:
recevoir une image des aliments d'une caméra (102) et déterminer une couleur actuelle des aliments selon les valeurs de pixel de l'image;
**caractérisé en ce que** le procédé comprend par ailleurs le fait de:
effectuer une marginalisation sur l'image pour obtenir un contour d'un récipient de cuisson (104);
acquérir une valeur de pixel de chaque point de pixel dans l'image;
établir la moyenne des valeurs de pixel des points de pixel dans le contour du récipient de cuisson pour obtenir une valeur de pixel moyenne; et
déterminer la valeur de pixel moyenne comme valeur de pixel de la couleur actuelle des aliments.

2. Procédé selon la revendication 1, dans lequel l'acquisition (201, 301) du paramètre de cuisson pendant la cuisson des aliments comprend au moins l'un parmi le fait de:
recevoir les données de poids d'un four de cuisson (103) ou du récipient de cuisson (104), et déterminer un poids des aliments selon les données de poids;
ou
recevoir une densité de fumée d'un capteur de densité de fumée (105).

3. Procédé selon la revendication 1 ou 2, dans lequel la détermination (202, 302) de la puissance de fonctionnement cible de la hotte aspirante (101) selon le paramètre de cuisson comprend le fait de:
régler une première puissance préétablie comme puissance de fonctionnement cible de la hotte aspirante (101) lorsque le poids des aliments est supérieur à un poids préétabli; et
régler une deuxième puissance préétablie comme puissance de fonctionnement cible de la hotte aspirante (101) lorsque le poids des aliments est inférieur ou égal au poids préétabli.

4. Procédé selon la revendication 1 ou 2, dans lequel la détermination (202, 302) de la puissance de fonctionnement cible de la hotte aspirante (101) selon le paramètre de cuisson comprend le fait de:
régler une troisième puissance préétablie comme puissance de fonctionnement cible de la hotte aspirante (101) lorsque la couleur actuelle des aliments ne se situe pas dans une plage de couleurs préétablie; et
régler une quatrième puissance préétablie comme puissance de fonctionnement cible de la hotte aspirante (101) lorsque la couleur actuelle des aliments se situe dans la plage de couleurs préétablie.

5. Procédé selon la revendication 4, comprenant par ailleurs le fait de:
après avoir réglé la troisième puissance préétablie comme puissance de fonctionnement cible de la hotte aspirante (101), générer un message d'alarme pour déclencher une alarme pour la cuisson; et/ou
arrêter d'alimenter de l'électricité ou du gaz pour la cuisson des aliments.

6. Procédé selon la revendication 1 ou 2, dans lequel la détermination (202, 302) de la puissance de fonctionnement cible de la hotte aspirante (101) selon le paramètre de cuisson comprend le fait de:
régler une cinquième puissance préétablie comme puissance de fonctionnement cible de la hotte aspirante (101) lorsque la densité de fumée est supérieure à une densité de fumée préétablie; et
régler une sixième puissance préétablie comme puissance de fonctionnement cible de la hotte aspirante (101) lorsque la densité de fumée est inférieure ou égale à la densité de fumée préétablie.

7. Procédé selon la revendication 6, comprenant par ailleurs le fait de:
après avoir réglé la cinquième puissance préétablie comme puissance de fonctionnement cible de la hotte aspirante (101), générer un message d'alarme pour déclencher une alarme pour la cuisson; et/ou
arrêter l'alimentation d'électricité ou de gaz pour la cuisson des aliments.

8. Dispositif de commande d'une hotte aspirante (101), comprenant:
un module d'acquisition (401) configuré pour acquérir un paramètre de cuisson pendant la cuisson des aliments, où le paramètre de cuisson est configuré pour indiquer un état des aliments pendant la cuisson;
un module de détermination (402) configuré pour déterminer une puissance de fonctionnement cible de la hotte aspirante (101) selon le paramètre de cuisson; et
un module de commande (403) configuré pour commander la hotte aspirante (101) de manière à fonctionner selon la puissance de fonctionnement cible;
dans lequel
le module d'acquisition (401) est par ailleurs configuré pour effectuer le fait de:
recevoir une image des aliments d'une caméra (102) et déterminer une couleur actuelle des aliments selon les valeurs de pixel de l'image;
**caractérisé en ce que** le module d'acquisition (401) est par ailleurs configuré pour effectuer le fait de:
effectuer une marginalisation sur l'image pour obtenir un contour d'un récipient de cuisson (104);
acquérir une valeur de pixel de chaque point de pixel dans l'image;
établir la moyenne des valeurs de pixel des points de pixel dans le contour du récipient de cuisson pour obtenir une valeur de pixel moyenne; et
déterminer la valeur de pixel moyenne comme valeur de pixel de la couleur actuelle des aliments.

9. Dispositif selon la revendication 8, dans lequel le module d'acquisition (401) est configuré pour effectuer au moins l'un parmi le fait de:
recevoir les données de poids d'un four de cuisson (103) ou du récipient de cuisson (104), et déterminer un poids des aliments selon les données de poids;
ou
recevoir une densité de fumée d'un capteur de densité de fumée (105).

10. Dispositif selon la revendication 8 ou 9, dans lequel le module de détermination (402) est configuré pour:
régler une première puissance préétablie comme puissance de fonctionnement cible de la hotte aspirante (101) lorsque le poids des aliments est supérieur à un poids préétabli; et
régler une deuxième puissance préétablie comme puissance de fonctionnement cible de la hotte aspirante (101) lorsque le poids des aliments est inférieur ou égal au poids préétabli.

11. Dispositif selon la revendication 8 ou 9, dans lequel le module de détermination (402) est configuré pour:
régler une troisième puissance préétablie comme puissance de fonctionnement cible de la hotte aspirante (101) lorsque la couleur actuelle des aliments ne se situe pas dans une plage de couleurs préétablie; et
régler une quatrième puissance préétablie comme puissance de fonctionnement cible de la hotte aspirante (101) lorsque la couleur actuelle des aliments se situe dans la plage de couleurs préétablie.

12. Dispositif selon la revendication 11, dans lequel le module de détermination (402) est par ailleurs configuré pour:
générer un message d'alarme pour déclencher une alarme pour la cuisson; et/ou
arrêter d'alimenter de l'électricité ou du gaz pour la cuisson des aliments.

13. Dispositif selon la revendication 8 ou 9, dans lequel le module de détermination (402) est configuré pour:
régler une cinquième puissance préétablie comme puissance de fonctionnement cible de la hotte aspirante (101) lorsque la densité de fumée est supérieure à une densité de fumée préétablie; et
régler une sixième puissance préétablie comme puissance de fonctionnement cible de la hotte aspirante (101) lorsque la densité de fumée est inférieure ou égale à la densité de fumée préétablie.

14. Dispositif selon la revendication 13, dans lequel le module de détermination (402) est par ailleurs configuré pour:
générer un message d'alarme pour déclencher une alarme pour la cuisson; et/ou
arrêter d'alimenter de l'électricité ou du gaz pour la cuisson des aliments.

15. Support de mémoire lisible par ordinateur qui mémorise des instructions qui, lorsqu'elles sont exécutées par un processeur, font que le procédé selon l'une quelconque des revendications 1 à 7 soit mis en œuvre par le dispositif selon la revendication 8.
